# EUROPEAN PATENT APPLICATION

(11) **EP 1 128 667 A2**
(43) Date of publication of application: **29.08.2001**
(21) Application number: 01301655.5
(22) Date of filing: 23.02.2001
(51) Int. Cl.: H04N 5/262

(54) **Television illustration system**

(30) Priority: 26.02.2000 GB 0004499
(71) Applicant: Orad Hi-Tec Systems Limited, 44425 Kfar Saba (IL)
(72) Inventor: Tamir, Michael, 69122 Tel-Aviv (IL); Sharir, Avi, 67727 Ramat Hasharon (IL)
(74) Representative: Fox-Male, Nicholas Vincent Humbert

(57) **Abstract**

The tele-illustrator system enables a commentator to mark the progression of a player as defined on a pitch in real time as an event progresses and for this progressive position to be correctly positioned on a video screen regardless of the movement of a video camera creating the video image of the pitch as defined.

## Description

The present invention relates to television systems and more particularly to systems which enable a commentator or other operator to analyse a sporting event.

During many sporting events such as, for example, baseball, basketball, golf, skiing, etc, it is often advantageous for a commentator or technical expert to mark on a video screen the movement of, for example, a player or ball.

A problem, however, with marking such a movement during a live event is that the camera does not remain static, since it must follow the play.

If a commentator marks a spot on a screen indicating the position of a player, then the spot will be moved by the commentator to follow the movement of the player. However, if the camera moves as the player moves, then the point as represented on the video screen will not follow the path of the player. In a specific example, if the camera were to move (pan) at exactly the same speed as the player then the commentator would essentially mark only a single spot on the screen as used by the commentator. This will not show to the viewer the movement of the player.

It is an object of the present invention to provide a television illustrator system which can enable a commentator to trace the path of a player on a path or field in real time even when the camera pans or tilts.

The following description will be limited to players and will use as an example a football field.

However, players are defined to include other objects such as balls, pucks, boats, cars, etc, and the field is defined to include other courses such as ski runs, sailing courses, motor and cycle race tracks etc.

The present invention therefore provides a television illustrator system including means for videoing a football game (as defined) to provide a video display of said game means for capturing the camera field of view for every video frame means for marking a point or line on a first video screen (commentator screen), including a mark on a field at defined coordinate position on said field means for transposing the position of the mark into world coordinates:
means for calculating for every required frame of a video the size and position of said mark in video coordinates; and
means for combining the output video of a football game (as defined) with the mark in video coordinates to provide a combined video output of said video and said mark such that said mark appears on said combined video output in the correct position in video coordinates in each frame.

Preferably said system comprises video camera means for inputting a video image of said football game on to said video screen.

Alternatively, said system comprises video recorder means including means for storing a representation of a football game for display on said video screen.

Preferably said system includes means for storing an electronic template.

In a preferred embodiment the electronic template comprises a representation of said football pitch and comprises fixed markings on said template comprising prior player movements or defined movements drawn by said commentator.

A television illustrator as claimed in any one of claims 1 to 5 in which the means for combining the output video of the football game (as defined) with the mark in video coordinates to provide a combined video output of said video and said mark using, for example, chroma key or difference key techniques.

Embodiments of the present invention will now be described by way of example with reference to the accompanying drawings in which:-
Figure 1 shows successive drawings of a football pitch, as defined, illustrating the principle of the present invention,
Figure 2 shows a first embodiment of the present invention, and
Figure 3 shows a second embodiment of the present invention.

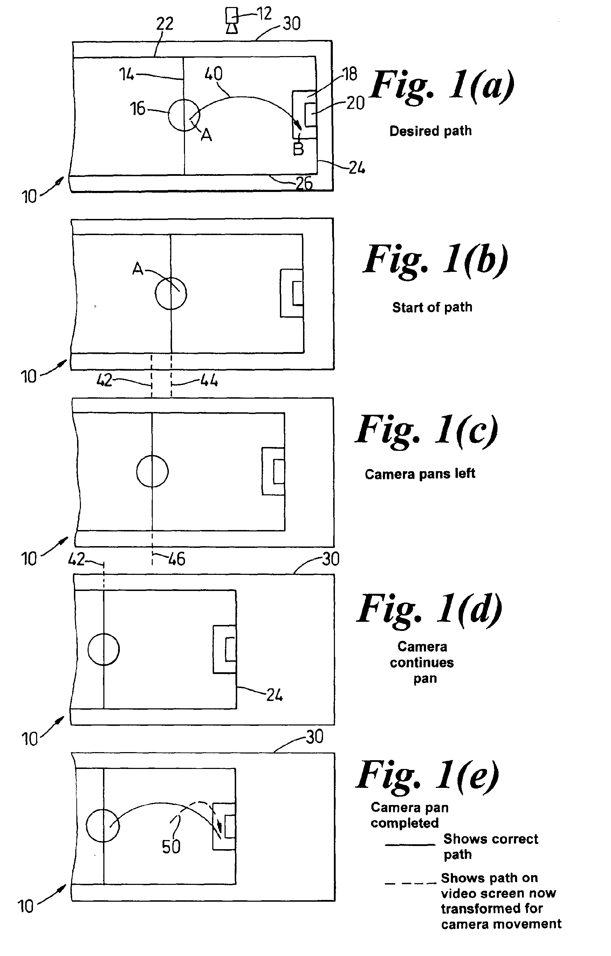

With reference to Figure 1, figures 1(a) to 1(e) illustrate the principle of the present invention showing views of a football pitch in various camera field of views.

Figure 1(a) shows a pitch 10, as defined, as seen in a first field of view (FOV) of a video camera 12.

The term pitch and player are as defined previously.

The pitch comprises, in known manner, a series of markings which are represented by a centre line 14, centre circle 16 and goal area markings 18,20 and side lines 22,24,26. The area of the video screen viewed by the camera is indicated by 30.

In Figure 1 a desired path is required to be marked by a commentator on the pitch. the path may, for example, be illustrative of a path which the commentator considers that a player should follow.

The path could be drawn by a commentator on a commentator screen or could be obtained by using a template which could be drawn, for example, by an expert in the particular sport to illustrate, for example, a perfect move such as in slalom skiing, etc.

The path 40 drawn by the commentator in real time on a commentator screen commences at point A and finishes at point B. The path could represent the path of a ball being controlled by a player representing a run by the player and then a cross from point C to point B.

Providing the camera is static and does not change its field of view, the path A,C,B will follow the player and any deviation by the player from this path will be apparent.

However, this will not be so for a path traced by a commentator during a continuous panning, zooming operation as often occurs or included if the camera is changed to a second or third camera.

This is illustrated in figures 1(b) to 1(e).

In Figure 1(b) the start of path A is shown at a field of view as in Figure 1(a).

In Figure 1(c) the camera commences a pan to the left as indicated by dotted lines 42,44 and in Figure 1(d) the camera continues to pan left as indicated by line 42,46.

If the commentator draws the path 40 on the screen as the player moves, the path will look as in path 50 on Figure 1(e) because the position of the player on the screen will move to the left as the camera so moves.

Thus the path on the output video will in real time look as in 50 and will be in comprehensible to the viewer. The commentator's path 50 will be, in this case, incorrect because of the panning of the camera, but similar problems can arise because of zooming or tilting.

For this reason, in previous illustration systems commentators could only presently draw paths on still frames or fixed representations of pitches. Similarly, if a fixed overlay is provided on which the position of a player is follows, this can only be superimposed over a fixed field of view of the pitch and not a video of the pitch in real time.

The present invention provides a means for a commentator to draw or to follow the movement of a player on a pitch in real time and to enable the viewer to view this in real time.

This is enabled by translation of each point which is marked by the commentator on the video screen being converted to world coordinates and then for the dimensions of the pitch to be known in world coordinates at each field of view of the camera and being converted in accordance with the specific field of view at each video frame to present the mark on the pitch at the correct position, regardless of the action by the cameraman.

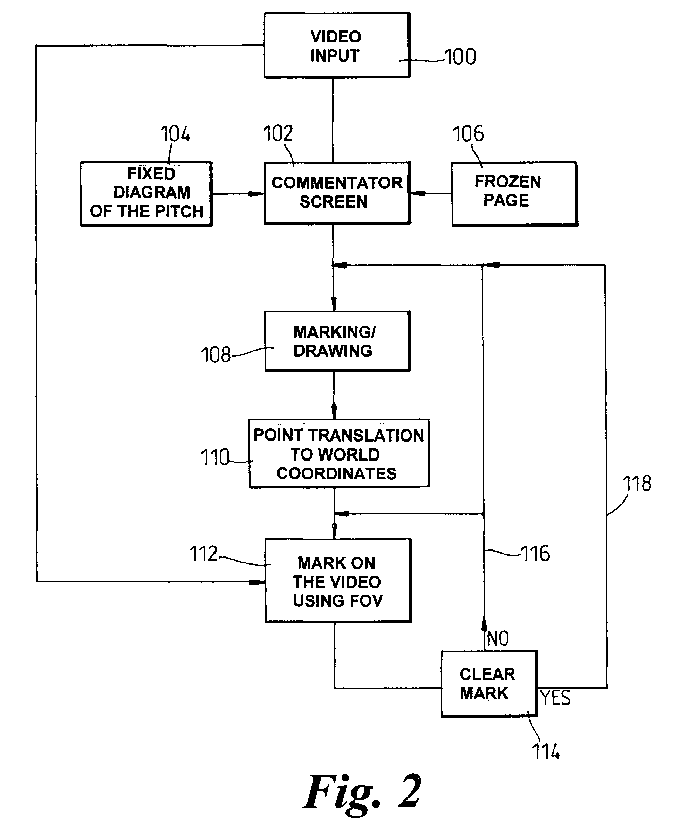

With reference to Figure 2, in a video input 100 provides input to a commentator screen 102, or alternatively, a fixed diagram of a pitch 104 may be presented to the commentator.

The commentator may select to freeze a page 106 which will then be displayed on the screen 102.

The commentator can mark points 108 on the screen and each point is translated in to world coordinates. The translator will then mark the point on to the video 110 using the field of view of the camera.

If the mark is to be cleared then this may be accomplished 114 to clear the video output when the commentator has finished.

If the mark is not cleared, then any further mark will be added to the existing mark, but if cleared any new mark will appear alone giving the commentator chance to change his markings. Paths 114,118 apply.

If more than one camera is used then the field of view for each selected camera will enable the mark to be correctly positioned providing that each camera field of view for a specific pitch is known and a switch indication is included to identify the camera selected by the director.

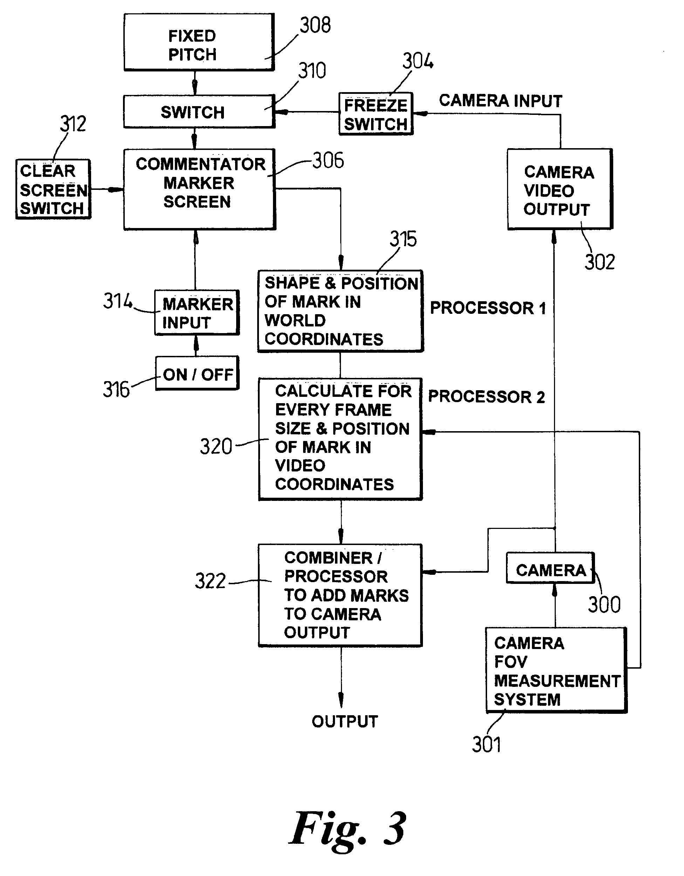

With reference now to Figure 3, apparatus for the present invention is shown.

A camera 300 provides an output 302 which is fed to a commentator screen via a freeze switch 304 which may be operated by a commentator to freeze a frame. If the switch is not operated, then the moving video will be displayed on the commentator screen 306, or alternatively, a fixed representation of the pitch 308 may be selected via switch 310 operable by a commentator.

The camera Field of View (FOV) is measured by a camera FOV measurement system 301 which the output of which is connected to processor 320 as an input.

A clear screen switch 312 is provided to clear the screen marks (step 114 figure 2).

The commentator can operate a screen marker 314 via an on/off switch 316.

Any mark placed in the screen 306 by the commentator is transferred into world coordinates by a first processor 318 and in a second processor 320 the size and position of each mark is calculated for every frame in video coordinates using the known field of view of the camera 300 as supplied by unit 301.

A third processor/combiner circuit 322 combining the video output of camera 300 with the mark (eg A-figure 1(b)) and provides a combined video output.

The mark may be a selected size to be more identifiable - eg 4 x 4 pixels.

Thus the mark applied by the commentator to screen 306 will follow the correct path for the player in real coordinates not withstanding any movement (pan, tilt, zoom) by the camera.

## Claims

1. A television illustrator system including means for videoing a football game (as defined) to provide a video display of said game;
means for capturing the camera field of view for every video frame;
means for marking a point or line on a first video screen (commentator screen), including a mark on a field at defined coordinate position on said field means for transposing the position of the mark into world coordinates:
means for calculating for every required frame of a video the size and position of said mark in video coordinates; and
means for combining the output video of the football game (as defined) with the mark in video coordinates to provide a combined video output of said video and said mark such that said mark appears on said combined video output in the correct position in video coordinates in each frame.

2. A television illustrator as claimed in claim 1 in which said system comprises video camera means for inputting a video image of said football game on to said video screen.

3. A television illustrator as claimed in claim 1 in which said system comprises video recorder means including means for storing a representation of a football game for display on said video screen.

4. A television system as claimed in any one of claims 1 to 3 in which said system includes means for storing an electronic template.

5. A television system as claimed in claim 4 in which the electronic template comprises a representation of said football pitch and comprises fixed markings on said template comprising prior player movements or defined movements drawn by said commentator.

6. A television illustrator as claimed in any one of claims 1 to 5 in which the means for combining the output video of the football game (as defined) with the mark in video coordinates to provide a combined video output of said video and said mark using, for example, chroma key or difference key techniques.
